# EUROPÄISCHE PATENTSCHRIFT

(11) **EP 4 174 036 B1**
(45) Veröffentlichungstag und Bekanntmachung des Hinweises auf die Patenterteilung: **31.01.2024**
(21) Anmeldenummer: 22197141.9
(22) Anmeldetag: 22.09.2022
(51) Int. Cl.: C03B 9/36, C03B 9/38

(54) **VERFAHREN ZUM BETREIBEN EINER IS-MASCHINE ZUR HERSTELLUNG VON GLASBEHÄLTERN**
METHOD OF OPERATING AN IS MACHINE FOR PRODUCING GLASS CONTAINERS
PROCÉDÉ DE FONCTIONNEMENT D'UNE MACHINE IS POUR LA FABRICATION DE RÉCIPIENTS EN VERRE

(30) Priorität: 26.10.2021 DE 102021127832
(43) Veröffentlichungstag der Anmeldung: 03.05.2023
(73) Patentinhaber: Heye International GmbH, 31683 Obernkirchen (DE)
(72) Erfinder: Schöttelndreier, Ralf, 31688 Nienstädt (DE); Hartmann, Thomas, 31675 Bückeburg (DE); Winkelhake, Dirk, 31688 Nienstädt (DE)
(74) Vertreter: Michalski Hüttermann & Partner Patentanwälte mbB

(56) Entgegenhaltungen:
- DE-A1-102015 007 695
- US-A1- 2010 096 020
- US-A1- 2012 174 628

## Beschreibung

Die Erfindung betrifft ein Verfahren zum Betreiben einer IS-Maschine zur Herstellung von Glasbehältern, wobei die IS-Maschine eine Mehrzahl von Vorformen und eine Mehrzahl von Fertigformen aufweist und jeweils eine Vorform mit einer Fertigform zusammenwirkt, mit folgenden Verfahrensschritten, die jeweils für ein Paar einer Vorform und einer Fertigform durchgeführt werden:
Einleiten eines Glastropfens in die Vorform,
Erzeugen eines Külbels aus dem Glastropfen in der Vorform,
Überführen des Külbels in die Fertigform,
Ansteuern eines Vakuumventils zum Erzeugen eines Vakuums in der Fertigform ab einem ersten Ansteuerzeitpunkt und
Ansteuern eines Fertigblasventils zum Erzeugen eines Fertigblasdrucks ab einem zweiten Ansteuerzeitpunkt, der gegenüber dem ersten Ansteuerzeitpunkt um eine vorbestimmte Zeitdauer später ist, so dass in die Fertigform von oben Druckluft eingeblasen wird, und gleichzeitiges Messen des Verlaufs des Fertigblasdrucks und Überprüfen, ob der Verlauf des gemessenen Vakuumdrucks und der Verlauf des gemessenen Fertigblasdruck eine vorbestimmte Bedingung erfüllt haben,wobei in dem Schritt des Überprüfens, ob der Verlauf des gemessenen Vakuumdrucks und der Verlauf des gemessenen Fertigblasdruck eine vorbestimmte Bedingung erfüllt haben, geprüft wird, ob der Verlauf des gemessenen Vakuumdrucks zu dem Verlauf des gemessenen Fertigblasdrucks in einer vorbestimmten Relation gestanden hat.

Das Betreiben einer IS-Maschine zur Herstellung von Glasbehältern ist aus dem Stand der Technik bereits seit Jahrzehnten bekannt. Die Begriffe "IS-Maschine", "Vorform", "Fertigform", "Külbel", "Niederblasen", "Vorblasen" und "Fertigblasen" stellen insofern dem Fachmann bekannte Fachbegriffe dar, die daher hier nicht im Einzelnen erläutert werden müssen. Der Anschaulichkeit halber seien gleichwohl die Grundzüge des aus dem Stand der Technik bekannten Betreibens einer IS-Maschine in einem Blas-Blas-Verfahren nachfolgend kurz erläutert:
Glas wird in einer Schmelzwanne verflüssigt und fließt aus der Schmelzwanne in einen Feeder. Am Kopf des Feeders wird mittels einer Speisermaschine ein länglicher Glastropfen ausgebildet. Dieser Glastropfen wird über eine Rinne in eine Vorform geleitet. Die spätere Mündung des herzustellenden Glasbehälters zeigt dabei nach unten. Dann setzt ein Vorformboden auf die Vorform auf und schließt die Vorform. Von oben wird Druckluft eingeblasen, damit die aufgrund des Glastropfens bereitgestellte Glasmasse eine unten an der Vorform sitzende Mündungsform ganz ausfüllt. Dieser Schritt wird als Niederblasen bezeichnet. Nachfolgend wird der Vorformboden entfernt und die Vorform wird oben mit einem Vorformboden verschlossen. In die dadurch unten entstandene Öffnung wird das Glas durch einströmende Druckluft zum Külbel vorgeblasen. Danach wird die Vorform geöffnet und das vorgeblasene Werkstück, also das Külbel, wird von einem Übergabemechanismus um 180° in die zugehörige offene Fertigform geschwenkt. Das Külbel wird dabei in einer Mündungsform gehalten. Die Mündung befindet sich nun oben. Dann wir die Mündungsform geöffnet und der Übergabemechanismus schwenkt zurück in die Ausgangsposition, um das nächste Külbel in der Vorform aufzunehmen. Währenddessen wird die Fertigform von oben durch einen Blaskopf verschlossen, um das Külbel in der Fertigform durch Druckluft zu seiner Endform fertigzublasen. Danach schwenkt der Blaskopf zurück, die Fertigform wird geöffnet und ein Greifer befördert das fertige Werkstück auf eine Absetzplatte. In der Regel schiebt ein weiterer Mechanismus das fertige Werkstück dann auf ein Band, das den Artikel in einen Kühlbereich befördert.

Der Vollständigkeit halber sei erwähnt, dass das zuvor beschriebene Blas-Blas-Verfahren freilich nicht das einzige Verfahren ist, mit dem mittels einer IS-Maschine Glasbehälter hergestellt werden können. Bekannt ist es z.B. auch, eine IS-Maschine mit einem Press-Blas-Prozess zu betreiben. Dabei wird das Külbel nicht geblasen, sondern durch einen durch die Mündungsform eingeführten Stempel gepresst. Dieses Verfahren fand zuerst bei weithalsigen Behältern Anwendung, liefert jedoch insbesondere bei enghalsigen Flaschen besondere Vorteile.

Bei solchen Verfahren ergibt sich nun das nachfolgend erläuterte Problem: Wenn die Drücke für das Fertigblasen einerseits und für die Erzeugung des Vakuums andererseits zum selben Zeitpunkt anstehen, dann addieren sich die Drücke und die Verformungsgeschwindigkeit des Glases erhöht sich. Durch die erhöhte Verarbeitungsgeschwindigkeit können Risse, sogenannte Druckrisse, entstehen. Um dieses zu vermeiden, werden in der Regel in einem elektronischen Timer unterschiedliche Startzeitpunkte für Fertigblasen und Vakuum eingestellt. Die zeitliche Differenz sollte mindestens 50 ms betragen. Da die Zeit, bis ein Druck wirklich ansteht, aber durch eine ganze Reihe von Faktoren, wie Schalthysterese des elektronischen Timers, Pilotluftdruck, Zustand des Ventils, Zustand der Schaltpatrone und auch Leitungslänge und Durchmesser, beeinflusst wird, ist es bisher praktisch nicht möglich, sicherzustellen, dass sich nur solche Drücke einstellen, die gewollt und für Herstellung der Glasbehälter unproblematisch sind. Daher kommt es immer wieder zu Ausschuss bei den Glasbehältern, da das zeitliche Anliegen der jeweiligen Drücke, zumindest nach einer gewissen Betriebszeit der IS-Maschine, nicht mehr wie gewünscht und voreingestellt mit der Ansteuerung des jeweiligen Ventils korreliert

Die US 2010/096020 A1 beschreibt ein Vakuumventil zur Verwendung mit einer Fertigform in einer I.S.-Maschine. Wenn sich die Fertigform um ein Külbel schließen, wird ein Vakuum an die Wand des Külbels angelegt. Nach dem Anlegen des Vakuums wird das Külbel durch das Fertigblasen zu einer Flasche geblasen. Dieses Vakuum wird so lange angelegt, bis das Külbel zu einer Flasche geblasen wurde. Während des Zeitraums, in dem das Vakuum anliegt, aber das Fertigblasen noch nicht begonnen hat, wird das Vakuum durch Betätigung eines Nadelventils in der Vakuumleitung reduziert.

Die DE 10 2015 007 695 A1 zeigt eine Anordnung zur Überwachung der Vakuumbeaufschlagung der Fertigformen einer Glasformmaschine, insbesondere einer I. S. Maschine, welche aus einem, in einer, die Fertigform beaufschlagenden Vakuumleitung angeordneten, zur Druckmessung bestimmten Vakuumsensor besteht, der einen Druckwert erfasst, der über einen Mikro-Controller einer I. S. Maschinensteuerung übertragen wird, über welche in Abhängigkeit von dem gemessenen Wert, ein Hohlglasartikel als fehlerhaft identifiziert und ausgeworfen werden kann. Die Anordnung ermöglicht eine automatisierte Überwachung des Vakuumbetriebs, eine Entlastung des Betriebspersonals und dient der automatisierten Sicherung einer Produktqualität.

Die US 2012/0174628 A1 zeigt ein System und ein Verfahren zur automatischen Anpassung der Zeitsteuerung der I.S.-Maschine zur Aufrechterhaltung der gewünschten vertikalen Glasverteilung, um die Prozessausbeute und -qualität zu verbessern und gleichzeitig die Abhängigkeit von der Geschicklichkeit des Bedieners zu verringern. Unzulänglichkeiten in der vertikalen Glasverteilung werden schnell behoben, indem der Beginn des Endblasens automatisch variiert wird, um mehr oder weniger Streckung des Vorformlings zu ermöglichen, und noch grundlegender, indem die Kühlung der Vorform angepasst wird.

Davon ausgehend ist es die Aufgabe der Erfindung, eine Möglichkeit bereitzustellen, einen solchen Betrieb einer IS-Maschine zu ermöglichen, bei dem Ausschuss aufgrund fehlerhaft hergestellter Glasbehälter gut erkannt werden kann und der zusätzlich vorzugsweise nur eine geringe Ausschussquote von Glasbehältern aufweist.

Diese Aufgabe wird durch den Gegenstand des Patentanspruchs 1 gelöst. Bevorzugte Weiterbildungen finden sich in den Unteransprüchen.

Wenn hier die Rede ist vom Messen des Verlaufs des Vakuumdrucks bzw. vom Messen des Verlaufs des Fertigblasdrucks, so werden diese Drücke an einer jeweiligen Stelle zwischen dem entsprechenden Ventil, also dem Vakuumventil bzw. dem Fertigblasventil, einerseits und der Eintrittsstelle des Vakuumdrucks bzw. des Fertigblasdrucks in die Fertigform andererseits, erfasst. In der Fertigform selbst addieren sich der Vakuumdruck und der Fertigblasdruck. Insofern ist es im Rahmen der Erfindung möglich, den jeweiligen Druck in einer entsprechenden Zuleitung zu erfassen, also in einer Vakuumzuleitung bzw. in einer Fertigblaszuleitung, und zwar zwischen dem Vakuumventil bzw. dem Fertigblasventil, einerseits und der Fertigform andererseits.

Maßgeblich für die Erfindung ist nun, dass der Verlauf des Vakuumdrucks und der Verlauf des Fertigblasdrucks gemessen werden, so dass überprüft werden kann, ob der Verlauf des gemessenen Vakuumdrucks und der Verlauf des gemessenen Fertigblasdruck eine vorbestimmte Bedingung erfüllt haben. Ergibt diese Überprüfung, dass die vorbestimmte Bedingung nicht erfüllt ist, können verschiedene Maßnahmen ergriffen werden, um fehlerhaft hergestellte Glasbehälter auszusondern und gegebenenfalls den Betrieb der IS-Maschine derart anzupassen, dass die Ausschussquote wieder sinkt. Dazu gibt es im Rahmen der Erfindung verschiedene Möglichkeiten, auf die nachfolgend exemplarisch eingegangen wird, indem bevorzugte Ausgestaltungen der Erfindung erläutert werden.

Unter diesem Aspekt ist erfindungsgemäß in dem Schritt des Überprüfens, ob der Verlauf des gemessenen Vakuumdrucks und der Verlauf des gemessenen Fertigblasdruck eine vorbestimmte Bedingung erfüllt hat, vorgesehen, zu prüfen, ob der Verlauf des gemessenen Vakuumdrucks zu dem Verlauf des gemessenen Fertigblasdrucks in einer vorbestimmten Relation gestanden hat. Auf diese Weise kann z.B. geprüft werden, wie der zeitliche Verlauf der Drücke zueinander war und insbesondere ob sich der Fertigblasdruck zu früh nach dem Anlegen des Vakuums aufgebaut hat, so dass der auf das Glas wirkende Gesamtdruck über einem Wert liegt, bei dem im Regelfall eine fehlerfreie Herstellung der Glasbehälter gewährleistet werden kann.

In diesem Zusammenhang ist vorzugsweise insbesondere vorgesehen, dass in dem Schritt des Überprüfens, ob der Verlauf des gemessenen Vakuumdrucks zu dem Verlauf des gemessenen Fertigblasdruck in einer vorbestimmten Relation gestanden hat, die Zeitdauer zwischen den Zeitpunkten bestimmt wird, zu denen der Verlauf des Fertigblasdrucks bzw. der Verlauf des Vakuumdrucks maximal ist. In diesem Zusammenhang ist gemäß einer bevorzugten Ausgestaltung der Findung vorgesehen, dass in dem Fall, dass das Überprüfen ergibt, dass die die Zeitdauer zwischen den Zeitpunkten, zu denen der Verlauf des Fertigblasdrucks bzw. der Verlauf des Vakuumdrucks maximal ist, nicht in einem vorbestimmten Zeitdauerbereich liegt, ein Ändern des zeitlichen Ansteuerns des Vakuumventils und/oder des Fertigblasventils bei einem nachfolgenden Ansteuern erfolgt, um die Zeitdauer zwischen den Zeitpunkten, zu denen der Verlauf des Fertigblasdrucks bzw. der Verlauf des Vakuumdrucks maximal ist, so einzuregeln, das sie in den vorbestimmten Zeitdauerbereich geführt wird.

Eine weitere bevorzugte Ausgestaltung der Erfindung sieht vor, dass in dem Fall, dass die Zeitdauer zwischen den Zeitpunkten, zu denen der Verlauf des Fertigblasdrucks bzw. der Verlauf des Vakuumdrucks maximal ist, geringer als eine vorbestimmte obere Zeitdauergrenze ist, eine Warnmeldung ausgegeben wird. Außerdem liegt eine bevorzugte Ausgestaltung der Erfindung darin, dass wenn das Überprüfen ergibt, dass die die Zeitdauer zwischen den Zeitpunkten, zu denen der Verlauf des Fertigblasdrucks bzw. der Verlauf des Vakuumdrucks maximal ist, geringer ist als eine untere Zeitdauergrenze, der Glasbehälter, bei dessen Herstellung die untere Zeitdauergrenze unterschritten worden ist, aussortiert wird.

Wie weiter schon angesprochen, soll die Zeitdifferenz zwischen den Druckspitzen im Allgemeinen über 50 ms liegen. Insofern ist gemäß einer bevorzugten Weiterbildung der Erfindung vorgesehen, ein Aussortieren eines Glasbehälters vorzusehen, für den eine geringere Zeitdifferenz zwischen den Druckspitzen ermittelt worden ist als 50 ms. Bei einer Zeit zwischen z.B. 50 ms und 100 ms ist vorzugsweise vorgesehen, Warnmeldungen an einen Bediener der IS-Maschine auszugeben. Vorzugsweise erfolgt im Übrigen immer dann ein Nachregeln des Ansteuerns des Vakuumventils und/oder des Fertigblasventils, wenn diese Zeitdauer zwischen den Druckspitzen nicht in einem vorbestimmten Zeitdauerbereich von z.B. 100 ms bis 120 ms liegt.

Eine bevorzugte Ausgestaltung der Erfindung, die alternativ oder auch zusätzlich zu den zuvor beschriebenen bevorzugten Ausgestaltungen der Erfindung verwirklicht sein kann, sieht vor, dass in dem Schritt des Überprüfens, ob der Verlauf des gemessenen Vakuumdrucks und der Verlauf des gemessenen Fertigblasdruck eine vorbestimmte Bedingung erfüllt hat/haben, geprüft wird, ob die der Verlauf der Summe des Vakuumdrucks und des Fertigblasdrucks einen vorbestimmten Maximaldruck nicht überschritten hat. Diese bevorzugte Weiterbildung der Erfindung stellt somit nicht auf die Zeitpunkte der Druckspitzen ab, sondern prüft direkt, ob ein vorbestimmter Maximaldruck in der Fertigform nicht überschritten worden ist. Vorzugsweise erfolgt dabei in dem Fall, dass das Überprüfen ergibt, dass der vorbestimmte Maximaldruck überschritten worden ist, ein Ändern des zeitlichen Ansteuerns des Vakuumventils und/oder des Fertigblasventils bei einem nachfolgenden Ansteuern, um den Verlauf der Summe des Vakuumdrucks und des Fertigblasdrucks so einzuregeln, dass der vorbestimmte Maximaldruck nicht mehr überschritten wird. Insbesondere ist in diesem Fall die Regelung derart eingestellt, dass die Enddruckwerte des Vakuumdrucks und des Fertigblasdrucks in möglichst kurzer Zeit erreicht werden.

Ähnlich wie weiter oben beschrieben ist auch hier in dem Fall, dass der Maximaldruck nur um eine erste vorbestimmte Druckdifferenz überschritten worden ist, vorgesehen, eine Warnmeldung auszugeben. Außerdem gilt vorzugsweise, dass im Fall, dass der Maximaldruck um eine vorbestimmte zweite Druckdifferenz überschritten worden ist, die größer als die erste vorbestimmte Druckdifferenz ist, der Glasbehälter, bei dessen Herstellung die vorbestimmte zweite Druckdifferenz überschritten worden ist, aussortiert wird.

Eine weitere bevorzugte Ausgestaltung der Erfindung, die ebenfalls alternativ oder auch zusätzlich zu den zuvor beschriebenen bevorzugten Ausgestaltungen der Erfindung verwirklicht sein kann, umfasst die folgenden zusätzlichen Verfahrensschritte, die jeweils für ein Paar einer Vorform und einer Fertigform durchgeführt werden:
Messen der Zeitdauer zwischen dem Zeitpunkt des Ansteuerns des Vakuumventils und dem Zeitpunkt, zu dem der Vakuumdruck einen vorbestimmten Vakuumdruckwert erreicht hat, und
Ändern der zeitlichen Ansteuerung des Vakuumventils bei einem nachfolgenden Ansteuern, um die Zeitdauer zwischen dem Zeitpunkt des Ansteuerns des Vakuumventils und dem Zeitpunkt, zu dem der Vakuumdruck einen vorbestimmten Vakuumdruckwert erreicht hat, auf eine vorbestimmte Zeitdauer einzuregeln.

Aufgrund von Alterungserscheinungen des Vakuumventils kann es dazu kommen, dass dieses trotz gleichbleibender zeitlicher Ansteuerung durch einen elektronischen Timer zeitlich nicht mehr so öffnet und schließt, wie gewünscht. Dem kann durch das zuvor beschriebene Ändern der zeitlichen Ansteuerung des Vakuumventils entgegengewirkt werden. Entsprechendes gilt für das Fertigblasventil, so dass gemäß einer bevorzugten Ausgestaltung der Erfindung ein Verfahren mit den folgenden zusätzlichen Verfahrensschritten vorgesehen ist, die jeweils für ein Paar einer Vorform und einer Fertigform durchgeführt werden:
Messen der Zeitdauer zwischen dem Zeitpunkt des Ansteuerns des Fertigblasventils und dem Zeitpunkt, zu dem der Fertigblasdruck einen vorbestimmten Fertigblasdruckwert erreicht hat, und
Ändern der zeitlichen Ansteuerung des Fertigblasventils bei einem nachfolgenden Ansteuern, um die Zeitdauer zwischen dem Zeitpunkt des Ansteuerns des Fertigblasventils und dem Zeitpunkt, zu dem der Fertigblasdruck einen vorbestimmten Fertigblasdruckwert erreicht hat, auf eine vorbestimmte Zeitdauer einzuregeln.

Die Erfindung umfasst jedoch nicht nur das Erfassen von Drücken, die der Fertigform zugeleitet werden. Im Rahmen einer bevorzugten Weiterbildung der Erfindung erfolgt in der Vorform zur Erzeugung des Külbels ein Niederblasen des Glastropfens in der Vorform mittels von oben in die Vorform eingeblasener Druckluft und ein Vorblasen des Glastropfens in der Vorform zu einem Külbel mittels von unten in die Vorform eingeblasener Druckluft, wobei in dem Schritt des Niederblasens des Glastropfens in der Vorform ein Ansteuern eines Niederblasventils zum Erzeugen eines Niederblasdrucks in der Vorform ab einem dritten Ansteuerzeitpunkt und ein gleichzeitiges Messen des Verlaufs des Niederblasdrucks erfolgt,
in dem Schritt des Vorblasens des Glastropfens in der Vorform zu einem Külbel ein Ansteuern eines Vorblasventils zum Erzeugen eines Vorblasdrucks in der Vorform ab einem vierten Ansteuerzeitpunkt, der gegenüber dem dritten Ansteuerzeitpunkt um eine vorbestimmte Zeitdauer später ist, und ein gleichzeitiges Messen des Verlaufs des Vorblasdrucks erfolgt und das Verfahren den folgenden zusätzlichen Verfahrensschritt aufweist, der ebenfalls jeweils für ein Paar einer Vorform und einer Fertigform durchgeführt wird:
Überprüfen, ob der Verlauf des gemessenen Niederblasdrucks und/oder der Verlauf des gemessenen Vorblasdrucks eine vorbestimmte Bedingung erfüllt haben.

Hierdurch wird z.B. ein Abstimmen der Dauer und des zeitlichen Versatzes zwischen Niederblasen und Vorblasen ermöglicht, und zwar unabhängig von den eingestellten Werten in einem zum Ansteuern der Ventile verwendeten elektronischen Timer. Auf diese Weise können weiteren Behälterfehlern entgegengewirkt werden, wie Knoten im Hals einer Flasche oder eine inhomogene Glasverteilung

Bevorzugte Ausgestaltungen beim Erfassen von der Vorform zugeleiteten Drücken ergeben sich in Analogie zu den weiter oben beschriebenen bevorzugten Ausgestaltungen der Erfindung im Zusammenhang mit der Fertigform. So ist es z.B. gemäß einer bevorzugten Weiterbildung der Erfindung vorgesehen, die Zeitdauer zwischen den Druckspitzen zu bestimmen, um in Abhängigkeit davon das Ansteuern des Niederblasventils und/oder des Vorblasventils zu verändern, z.B. auf eine vorbestimmte Zeitdauer zwischen den Druckspitzen einzuregeln. Im Übrigen kann freilich auch eine Warnmeldung erfolgen, wenn gewünschte Zeitdifferenzen nicht eingehalten werden.

Nachfolgend wir die Erfindung anhand eines bevorzugten Ausführungsbeispiels unter Bezugnahme auf die Zeichnungen weiter im Detail erläutert.

In den Zeichnungen zeigen
- Fig. 1: schematisch eine IS-Maschine gemäß einem bevorzugten Ausführungsbeispiel der Erfindung,

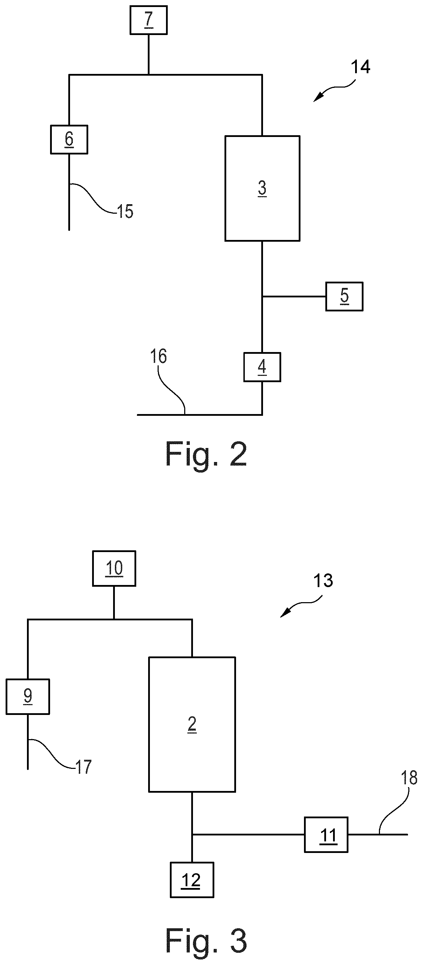

- Fig. 2: schematisch ein Fertigformsystem der IS-Maschine aus Fig. 1,
- Fig. 3: schematisch ein Vorformsystem der IS-Maschine aus Fig. 1,
- Fig. 4a: den Verlauf des Vakuumdrucks beim Einschalten,
- Fig. 4b: den Verlauf des Fertigblasdrucks beim Einschalten,
- Fig. 5a: die das Glas streckende Drucksumme bei gleichzeitigem Einschalten des Vakuums und des Fertigblasdrucks,
- Fig. 5b: die Veränderung der Drucksumme bei gleichzeitigem Einschalten des Vakuums und des Fertigblasdrucks,
- Fig. 6a: die das Glas streckende Drucksumme bei stark versetztem Einschalten des Vakuums und des Fertigblasdrucks,
- Fig. 6b: die Veränderung der Drucksumme bei stark versetztem Einschalten des Vakuums und des Fertigblasdrucks,
- Fig. 7a: die das Glas streckende Drucksumme bei optimal versetztem Einschalten des Vakuums und des Fertigblasdrucks,
- Fig. 7b: die Veränderung der Drucksumme bei optimal versetztem Einschalten des Vakuums und des Fertigblasdrucks und
- Fig. 8: ein Ablaufdiagramm eines Verfahrens gemäß dem bevorzugten Ausführungsbeispiel der Erfindung.

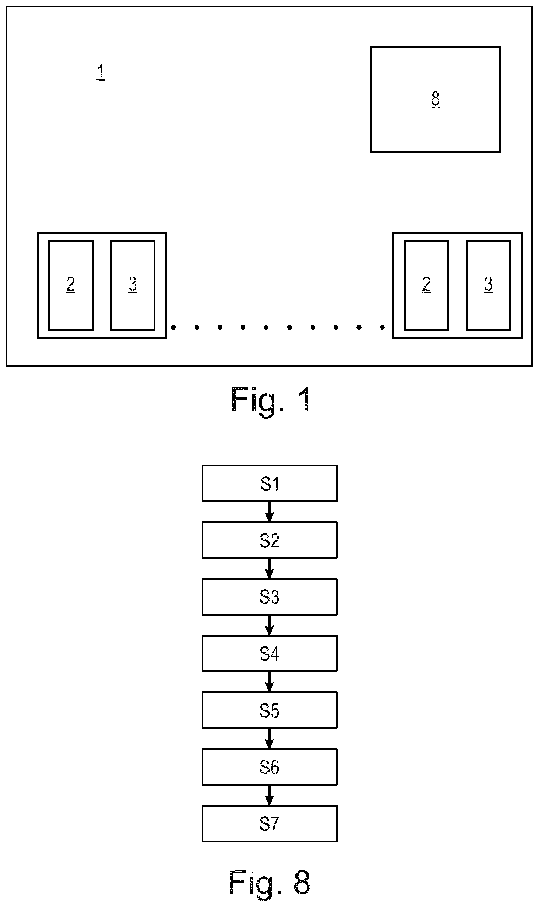

Aus Fig. 1 ist schematisch eine IS-Maschine 1 gemäß einem bevorzugten Ausführungsbeispiel der Erfindung ersichtlich, die dazu eingerichtet ist, in einem Blas-Blas-Verfahren Glasbehälter, wie Getränkeflaschen, herzustellen. Die IS-Maschine 1 weist eine Mehrzahl von Vorformen 2 und eine Mehrzahl von Fertigformen 3 auf, wobei jeweils eine Vorform 2 mit einer Fertigform 3 zusammenwirkt. Der Ablauf des mittels der IS-Maschine durchgeführten Herstellungsverfahrens wird mittels einer Maschinensteuerung 8 gesteuert.

Alle Vorformen 2 und alle Fertigformen 3 sind jeweils mit Ventilen und Drucksensoren ausgestattet, so dass insgesamt jeweils ein Vorformsystem 13 und ein Fertigformsystem 14 gebildet ist, und zwar wie folgt. Jede Fertigform 3 ist mit einer Vakuumleitung 16 mit einem Vakuumventil 4 zum Erzeugen eines Vakuums in der Fertigform 3 und einem Vakuumdrucksensor 5 zum Messen des Vakuumdrucks ausgestatt sowie mit einer Fertigblaszuleitung 15 mit einem Fertigblasventil 6 und einem Fertigblasdrucksensor 7. In ähnlicher Weise ist jede Vorform 2 mit einer Niederblaszuleitung 17 mit einem Niederblasventil 9 und einem Niederblasdrucksensor 10 ausgestattet sowie mit einer Vorblaszuleitung 18 mit einem Vorblasventil 11 und einem Vorblasdrucksensor 12.

Gemäß dem hier beschriebenen bevorzugten Ausführungsbeispiel der Erfindung ist damit das folgende Verfahren zur Herstellung der Glasbehälter vorgesehen, das schematisch in Fig. 8 dargestellt ist. Dabei werden die nachfolgend beschriebenen Verfahrensschritte jeweils für jedes Paar einer Vorform 2 und einer Fertigform 3 durchgeführt. Die nachfolgende Beschreibung erfolgt anhand eines einzigen Paares einer Vorform 2 und einer Fertigform 3.

In einem ersten Verfahrensschritt S1 wird ein Glastropfens in die Vorform 2 eingeleitet. Dann erfolgt in Verfahrensschritt S2 ein Niederblasen des Glastropfens in der Vorform mittels von oben durch die Niederblasleitung 17 hindurch in die Vorform 2 eingeblasener Druckluft. Die Steuerung dieser Druckluftzufuhr erfolgt durch ein Ansteuern des Niederblasventils 9 mittels der Maschinensteuerung 8. Es folgt in Verfahrensschritt S3 ein Vorblasen des Glastropfens in der Vorform 2 zu einem Külbel mittels von unten durch die Niederblaszuleitung 18 hindurch in die Vorform 2 eingeblasener Druckluft. Die Steuerung dieser Druckluftzufuhr erfolgt durch ein Ansteuern des Vorblasventils 11 mittels der Maschinensteuerung 8. Mit der Herstellung des Külbels ist der Herstellungsprozess in der Vorform 2 beendet, so dass in Verfahrensschritt S4 das Külbel in die Fertigform 3 überführt wird.

Dort erfolgt nun in Verfahrensschritt S5 ein Ansteuern des Vakuumventils 4 zum Erzeugen eines Vakuums in der Fertigform 3 ab einem ersten Ansteuerzeitpunkt. Gleichzeitig wird der Verlauf des Vakuumdrucks mittels des Vakuumdrucksensors 5 gemessen. Noch bevor der Verfahrensschritt S5 beendet ist, wird der Verfahrensschritt S6 gestartet, in dem ein Ansteuern eines Fertigblasventils 6 zum Erzeugen eines Fertigblasdrucks ab einem zweiten Ansteuerzeitpunkt erfolgt, der gegenüber dem ersten Ansteuerzeitpunkt um eine vorbestimmte Zeitdauer später ist. Dabei wird also in die Fertigform 3 von oben durch die Fertigblaszuleitung 15 hindurch Druckluft eingeblasen, während gleichzeitig der Verlauf des Fertigblasdrucks mittels des Fertigblasdrucksensors erfolgt.

Maßgeblich ist nun, dass anschließend im Verfahrensschritt S7 geprüft wird, ob der Verlauf des gemessenen Vakuumdrucks und der Verlauf des gemessenen Fertigblasdruck eine vorbestimmte Bedingung erfüllt haben. Dazu sieht das hier beschriebene bevorzugte Ausführungsbeispiel der Erfindung verschiedene Möglichkeiten vor, die nachfolgend beschrieben werden.

Eine bevorzugte Ausgestaltung der Erfindung liegt darin, dass in Schritt S7 des Überprüfens, ob der Verlauf des gemessenen Vakuumdrucks und der Verlauf des gemessenen Fertigblasdruck eine vorbestimmte Bedingung erfüllt hat/haben, geprüft wird, ob der Verlauf des gemessenen Vakuumdrucks zu dem Verlauf des gemessenen Fertigblasdrucks in einer vorbestimmten Relation gestanden hat, und zwar dahingehend, dass die Zeitdauer zwischen den Zeitpunkten bestimmt wird, zu denen der Verlauf des Fertigblasdrucks bzw. der Verlauf des Vakuumdrucks maximal ist. Sollte sich dabei ergeben, dass die Zeitdauer zwischen den Zeitpunkten, zu denen der Verlauf des Fertigblasdrucks bzw. der Verlauf des Vakuumdrucks maximal ist, nicht in einem vorbestimmten Zeitdauerbereich liegt, erfolgt ein Ändern des zeitlichen Ansteuerns des Vakuumventils 4 und/oder des Fertigblasventils 6 bei einem nachfolgenden Ansteuern, um die Zeitdauer zwischen den Zeitpunkten, zu denen der Verlauf des Fertigblasdrucks bzw. der Verlauf des Vakuumdrucks maximal ist, so einzuregeln, das sie in den vorbestimmten Zeitdauerbereich geführt wird. Dieser Zeitdauerbereich ist vorliegend der Bereich zwischen 100 und 120 ms. Der Hintergrund dazu ist wie folgt:
Für den Stress, dem das Glas beim Fertigblasen in der Fertigform 3 ausgesetzt ist, ist einerseits das Vakuum, das außen am Glas zieht, und andererseits der Fertigblasdruck beim Fertigblasen, der im Inneren wirkt, verantwortlich. Kritisch ist dabei primär vor allem der Druckgradient während des dynamischen Fertigblasens und weniger der Enddruck, der das Glas statisch in die Fertigform presst. Dabei wirken Vakuum und Blasdruck für die Glaswandung betrachtet in dieselbe Richtung.

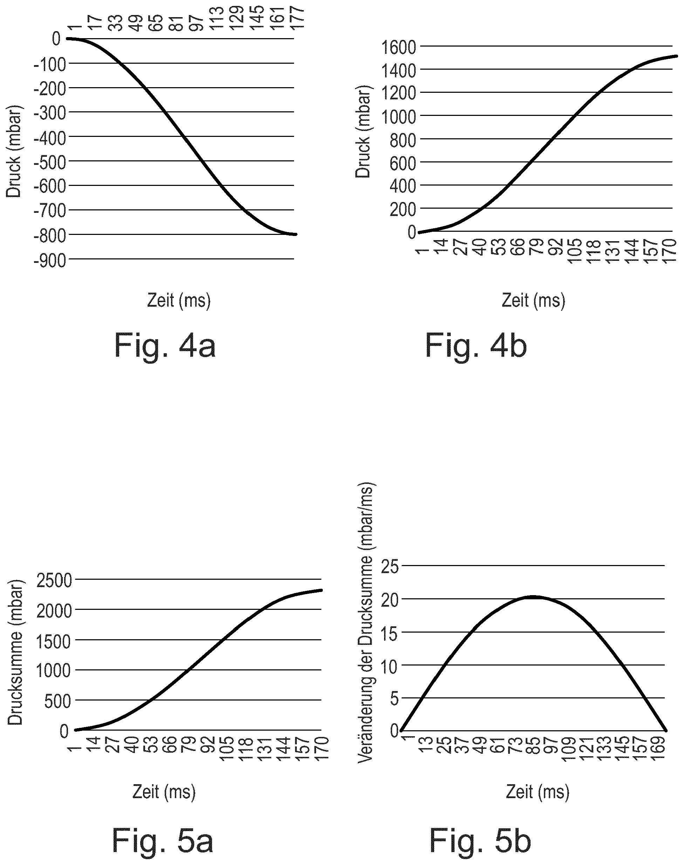

Zur Visualisierung des Sachverhaltes werden vorliegend die beiden Druckverläufe des Druckanstiegs als Sinus-Funktionen angenommen, um den Effekt der Drucküberlagerung anschaulich zu zeigen. Der statische Teil des Fertigblasens wird dabei nicht betrachtet. Als Vakuum wird ein Druck von - 800 mbar und als Blasdruck ein Druck von 1500 mbar angenommen. Als Druckaufbauzeit werden 180 ms angenommen. Damit ergeben sich Druckverläufe, wie in Fig. 4a für den Verlauf des Vakuumdrucks und in Fig. 4b für den Verlauf des Fertigblasdrucks gezeigt. Werden dies beiden Drücke von der Maschinensteuerung 8 freigegeben, so ist der genaue Zeitpunkt der Wirksamkeit in der Fertigblaszuleitung 15 und in der Vakuumzuleitung 16 von unterschiedlichen Komponenten abhängig. Wie sich die beiden Druckanstiege überlagern, wird also nicht alleine über die Ansteuerung des Fertigblasventils 6 und des Vakuumventils 4 bestimmt, sondern ergibt sich aus dem Schaltverhalten der gesamten Signalkette. Würden sie sich die beiden Druckanstiege genau überlagern, ergibt sich ein Druckverlauf und ein Druckgradientenverlauf, wie in den Fig. 5a und 5b dargestellt. Wie man sieht, ergibt sich dabei ein maximaler Druckgradient von 20 mbar/ms bei einem Enddruck von 2300 mbar.

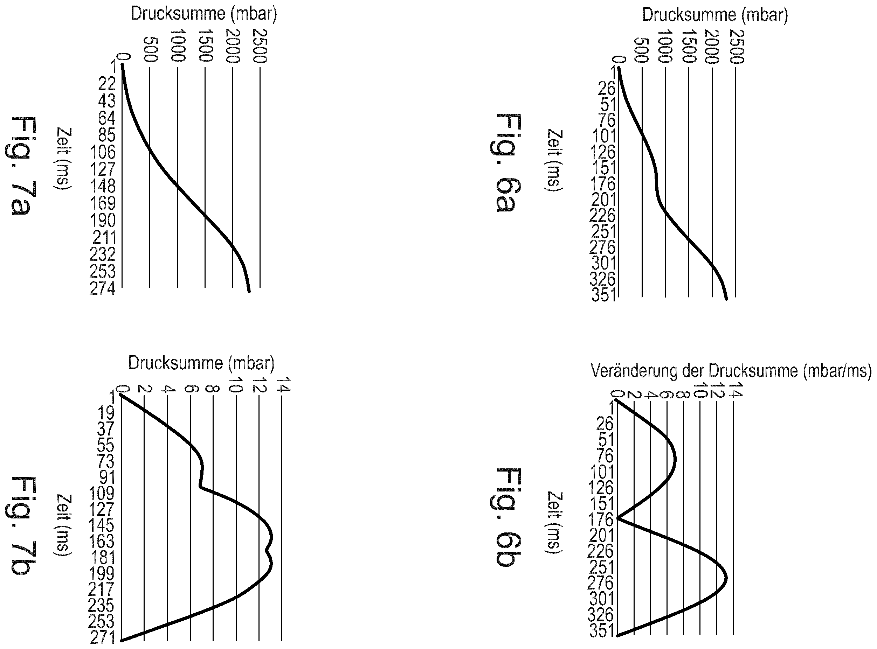

Würden das Vakuumventil 4 und das Fertigblasventil 6 tatsächlich so angesteuert werden, dass der erste Druckaufbau abgeschlossen ist, bevor der zweite startet, ergäben sich Verläufe für die Drucksumme und für die Veränderung der Drucksumme, wie in den Fig. 6a und 6b dargestellt. Dort ist erkennbar, dass dann der maximale Druckgradient nur noch ca. 13 mbar/ms beträgt, allerdings ist in diesem Fall die gesamte Druckaufbauzeit auch mindestens doppelt so lang, nämlich 360 ms. Der Enddruck beträgt wieder 2300 mbar, daran ändert sich nichts.

Ziel ist es nun, das Vakuumventil 4 und das Fertigblasventil 6 nach Möglichkeit so anzusteuern, dass sich ein Druckanstieg ergibt, der einem optimalen Verlauf möglichst nah kommt. Es wird also eine Optimierung angestrebt, gemäß der die beiden Kurven sich so überlagern, dass man eine Begrenzung des Druckanstiegs bei gleichzeitig kürzest möglicher Druckaufbauzeit erhält. Eine solche optimiert Kurve würde dann z.B. so aussehen, wie in den Fig. 7a und 7 b dargestellt. Der Startzeitpunkt des Fertigblasen ist hier um 110 ms gegenüber dem Startzeitpunkt des Anlegens des Vakuums verzögert. Erkennbar liegt der Druckgradient ebenfalls bei maximal 13 mbar/ms, aber im Gegensatz zur oben beschriebenen trivialen Lösung wurde die Gesamtdruckaufbauzeit auf 280 ms verkürzt. Der End-Druck ist wieder 2300 mbar. Optimal ist hier also eine zeitliche Verzögerung der tatsächlichen Ansteuerung des Vakuumventils 4 einerseits und des Fertigblasventils 6 andererseits, die 110 ms beträgt. Daher wird angestrebt, diese Zeitdifferenz, wie weiter oben beschrieben, in einen Bereich einzuregeln, der zwischen 100 und 120 ms liegt. Wie weiter schon erläutert worden ist, soll die Zeitdifferenz zwischen den Druckspitzen, also zu den Zeitpunkten, zu denen der Verlauf des Fertigblasdrucks bzw. der Verlauf des Vakuumdrucks maximal ist, im Allgemeinen über 50 ms liegen. Insofern ist hier vorgesehen, einen Glasbehälters auszusortieren, für den eine geringere Zeitdifferenz zwischen den Druckspitzen ermittelt worden ist als 50 ms. Bei einer Zeit zwischen z.B. 50 ms und 100 ms wird eine Warnmeldungen an einen Bediener der IS-Maschine ausgegeben, z.B. in Form eines optischen und/oder akustischen Signals.

Es stellt eine weitere Option bei dem hier beschriebenen bevorzugten Ausführungsbeispiel der Erfindung dar, in dem Schritt des Überprüfens, ob der Verlauf des gemessenen Vakuumdrucks und der Verlauf des gemessenen Fertigblasdruck eine vorbestimmte Bedingung erfüllt haben, zu prüfen, ob der Verlauf der Summe des Vakuumdrucks und des Fertigblasdrucks einen vorbestimmten Maximaldruck nicht überschritten hat. Wenn sich ergibt, dass der vorbestimmte Maximaldruck überschritten worden ist, erfolgt ein Ändern des zeitlichen Ansteuerns des Vakuumventils und/oder des Fertigblasventils bei einem nachfolgenden Ansteuern, um den Verlauf der Summe des Vakuumdrucks und des Fertigblasdrucks so einzuregeln, dass der vorbestimmte Maximaldruck nicht mehr überschritten wird. Dabei ist die Regelung derart eingestellt, dass die Enddruckwerte des Vakuumdrucks und des Fertigblasdrucks in möglichst kurzer Zeit erreicht werden, was vom Prinzip her in Grundzügen zuvor schon erläutert worden ist.

Auch hier wird in dem Fall, dass der Maximaldruck nur um eine erste vorbestimmte Druckdifferenz überschritten worden ist, eine Warnmeldung ausgegeben, z.B. als optisches und/oder akustisches Signal. Wird der Maximaldruck um eine vorbestimmte zweite Druckdifferenz überschritten, die größer als die erste vorbestimmte Druckdifferenz ist, wird der Glasbehälter, bei dessen Herstellung die vorbestimmte zweite Druckdifferenz überschritten worden ist, aussortiert.

Eine weitere Option bei dem vorliegen beschriebenen bevorzugten Ausführungsbeispiel der Erfindung liegt darin, zusätzliche Verfahrensschritte durchzuführen, die jeweils für ein Paar einer Vorform und einer Fertigform durchgeführt werden, und zwar wie folgt:

Es wird die Zeitdauer zwischen dem Zeitpunkt des Ansteuerns des Vakuumventils und dem Zeitpunkt, zu dem der Vakuumdruck einen vorbestimmten Vakuumdruckwert erreicht hat, gemessen und die zeitliche Ansteuerung des Vakuumventils bei einem nachfolgenden Ansteuern wird geändert, um die Zeitdauer zwischen dem Zeitpunkt des Ansteuerns des Vakuumventils und dem Zeitpunkt, zu dem der Vakuumdruck einen vorbestimmten Vakuumdruckwert erreicht hat, auf eine vorbestimmte Zeitdauer einzuregeln. Entsprechendes ist auch beim Fertigblasen möglich. Hier wird die Zeitdauer zwischen dem Zeitpunkt des Ansteuerns des Fertigblasventils und dem Zeitpunkt, zu dem der Fertigblasdruck einen vorbestimmten Fertigblasdruckwert erreicht hat, gemessen und die zeitlichen Ansteuerung des Fertigblasventils bei einem nachfolgenden Ansteuern wird geändert, um die Zeitdauer zwischen dem Zeitpunkt des Ansteuerns des Fertigblasventils und dem Zeitpunkt, zu dem der Fertigblasdruck einen vorbestimmten Fertigblasdruckwert erreicht hat, auf eine vorbestimmte Zeitdauer einzuregeln.

Weiterhin ist es eine Option bei den hier beschriebenen bevorzugten Ausführungsbeispiel der Erfindung, eine Optimierung nicht nur beim Fertigblasen sondern auch beim Vorblasen anzustreben. Konkret erfolgt dabei in dem Schritt des Niederblasens des Glastropfens in der Vorform 2 ein Ansteuern des Niederblasventils 9 zum Erzeugen des Niederblasdrucks in der Vorform 2 ab einem dritten Ansteuerzeitpunkt und ein gleichzeitiges Messen des Verlaufs des Niederblasdrucks, und in dem Schritt des Vorblasens des Glastropfens in der Vorform2 zu dem Külbel erfolgt ein Ansteuern des Vorblasventils 11 zum Erzeugen des Vorblasdrucks in der Vorform ab einem vierten Ansteuerzeitpunkt, der gegenüber dem dritten Ansteuerzeitpunkt um eine vorbestimmte Zeitdauer später ist, und ein gleichzeitiges Messen des Verlaufs des Vorblasdrucks. Außerdem ist zusätzlichen der folgende Verfahrensschritt vorgesehen, der ebenfalls jeweils für alle Paare einer Vorform 2 und einer Fertigform 3 durchgeführt wird. Dabei wird überprüft, ob der Verlauf des gemessenen Niederblasdrucks und/oder der Verlauf des gemessenen Vorblasdrucks eine vorbestimmte Bedingung erfüllt haben. Dabei kann grundsätzlich analog zum dem vorgegangen werden, was zuvor im Zusammenhang mit dem Fertigblasen beschrieben worden ist.

### Bezugszeichenliste

- 1: IS-Maschine
- 2: Vorformen
- 3: Fertigformen
- 4: Vakuumventil
- 5: Vakuumdrucksensor
- 6: Fertigblasventil
- 7: Fertigblasdrucksensor
- 8: Maschinensteuerung
- 9: Niederblasventil
- 10: Niederblasdrucksensor
- 11: Vorblasventil
- 12: Vorblasdrucksensor
- 13: Vorformsystem
- 14: Fertigformsystem
- 15: Fertigblaszuleitung
- 16: Vakuumzuleitung
- 17: Niederblaszuleitung
- 18: Vorblaszuleitung

## Patentansprüche

1. Verfahren zum Betreiben einer IS-Maschine (1) zur Herstellung von Glasbehältern, wobei die IS-Maschine (1) eine Mehrzahl von Vorformen (2) und eine Mehrzahl von Fertigformen (3) aufweist und jeweils eine Vorform (2) mit einer Fertigform (3) zusammenwirkt, mit folgenden Verfahrensschritten, die jeweils für ein Paar einer Vorform (2) und einer Fertigform (2) durchgeführt werden:
Einleiten eines Glastropfens in die Vorform (2),
Erzeugen eines Külbels aus dem Glastropfen in der Vorform (2),
Überführen des Külbels in die Fertigform (3),
Ansteuern eines Vakuumventils (4) zum Erzeugen eines Vakuums in der Fertigform (3) ab einem ersten Ansteuerzeitpunkt und gleichzeitiges Messen des Verlaufs des Vakuumdrucks,
Ansteuern eines Fertigblasventils (6) zum Erzeugen eines Fertigblasdrucks ab einem zweiten Ansteuerzeitpunkt, der gegenüber dem ersten Ansteuerzeitpunkt um eine vorbestimmte Zeitdauer später ist, so dass in die Fertigform von oben Druckluft eingeblasen wird, und gleichzeitiges Messen des Verlaufs des Fertigblasdrucks und
Überprüfen, ob der Verlauf des gemessenen Vakuumdrucks und der Verlauf des gemessenen Fertigblasdruck eine vorbestimmte Bedingung erfüllt haben,
wobei in dem Schritt des Überprüfens, ob der Verlauf des gemessenen Vakuumdrucks und der Verlauf des gemessenen Fertigblasdruck eine vorbestimmte Bedingung erfüllt haben, geprüft wird, ob der Verlauf des gemessenen Vakuumdrucks zu dem Verlauf des gemessenen Fertigblasdrucks in einer vorbestimmten Relation gestanden hat.

2. Verfahren nach Anspruch 1, wobei in dem Schritt des Überprüfens, ob der Verlauf des gemessenen Vakuumdrucks zu dem Verlauf des gemessenen Fertigblasdruck in einer vorbestimmten Relation gestanden hat, die Zeitdauer zwischen den Zeitpunkten bestimmt wird, zu denen der Verlauf des Fertigblasdrucks bzw. der Verlauf des Vakuumdrucks maximal ist.

3. Verfahren nach Anspruch 2, wobei in dem Fall, dass das Überprüfen ergibt, dass die Zeitdauer zwischen den Zeitpunkten, zu denen der Verlauf des Fertigblasdrucks bzw. der Verlauf des Vakuumdrucks maximal ist, nicht in einem vorbestimmten Zeitdauerbereich liegt, ein Ändern des zeitlichen Ansteuerns des Vakuumventils (4) und/oder des Fertigblasventils (6) bei einem nachfolgenden Ansteuern erfolgt, um die Zeitdauer zwischen den Zeitpunkten, zu denen der Verlauf des Fertigblasdrucks bzw. der Verlauf des Vakuumdrucks maximal ist, so einzuregeln, das sie in den vorbestimmten Zeitdauerbereich geführt wird.

4. Verfahren nach Anspruch 2 oder 3, wobei in dem Fall, dass das Überprüfen ergibt, dass die die Zeitdauer zwischen den Zeitpunkten, zu denen der Verlauf des Fertigblasdrucks bzw. der Verlauf des Vakuumdrucks maximal ist, geringer als eine vorbestimmte obere Zeitdauergrenze ist, eine Warnmeldung ausgegeben wird.

5. Verfahren nach einem der Ansprüche 2 bis 4, wobei in dem Fall, dass das Überprüfen ergibt, dass die Zeitdauer zwischen den Zeitpunkten, zu denen der Verlauf des Fertigblasdrucks bzw. der Verlauf des Vakuumdrucks maximal ist, geringer ist als eine untere Zeitdauergrenze, der Glasbehälter, bei dessen Herstellung die untere Zeitdauergrenze unterschritten worden ist, aussortiert wird.

6. Verfahren nach Anspruch 1, wobei in dem Schritt des Überprüfens, ob der Verlauf des gemessenen Vakuumdrucks und der Verlauf des gemessenen Fertigblasdruck eine vorbestimmte Bedingung erfüllt haben, geprüft wird, ob der Verlauf der Summe des Vakuumdrucks und des Fertigblasdrucks einen vorbestimmten Maximaldruck nicht überschritten hat.

7. Verfahren nach Anspruch 6, wobei in dem Fall, dass das Überprüfen ergibt, dass der vorbestimmte Maximaldruck überschritten worden ist, ein Ändern des zeitlichen Ansteuerns des Vakuumventils (4) und/oder des Fertigblasventils (6) bei einem nachfolgenden Ansteuern erfolgt, um den Verlauf der Summe des Vakuumdrucks und des Fertigblasdrucks so einzuregeln, dass der vorbestimmte Maximaldruck nicht mehr überschritten wird.

8. Verfahren nach Anspruch 7, wobei die Regelung derart eingestellt ist, dass die Enddruckwerte des Vakuumdrucks und des Fertigblasdrucks in möglichst kurzer Zeit erreicht werden.

9. Verfahren nach einem der Ansprüche 6 bis 8, wobei in dem Fall, dass der Maximaldruck nur um eine erste vorbestimmte Druckdifferenz überschritten worden ist, eine Warnmeldung ausgegeben wird.

10. Verfahren nach einem der Ansprüche 6 bis 9, wobei im Fall, dass der Maximaldruck um eine vorbestimmte zweite Druckdifferenz überschritten worden ist, die größer als die erste vorbestimmte Druckdifferenz ist, der Glasbehälter, bei dessen Herstellung die vorbestimmte zweite Druckdifferenz überschritten worden ist, aussortiert wird.

11. Verfahren nach einem der vorhergehenden Ansprüche mit den zusätzlichen Verfahrensschritten, die jeweils für ein Paar einer Vorform (2) und einer Fertigform (3) durchgeführt werden:
Messen der Zeitdauer zwischen dem Zeitpunkt des Ansteuerns des Vakuumventils (4) und dem Zeitpunkt, zu dem der Vakuumdruck einen vorbestimmten Vakuumdruckwert erreicht hat, und
Ändern der zeitlichen Ansteuerung des Vakuumventils (4) bei einem nachfolgenden Ansteuern, um die Zeitdauer zwischen dem Zeitpunkt des Ansteuerns des Vakuumventils (4) und dem Zeitpunkt, zu dem der Vakuumdruck einen vorbestimmten Vakuumdruckwert erreicht hat, auf eine vorbestimmte Zeitdauer einzuregeln.

12. Verfahren nach einem der vorhergehenden Ansprüche mit den zusätzlichen Verfahrensschritten, die jeweils für ein Paar einer Vorform (2) und einer Fertigform (3) durchgeführt werden:
Messen der Zeitdauer zwischen dem Zeitpunkt des Ansteuerns des Fertigblasventils (6) und dem Zeitpunkt, zu dem der Fertigblasdruck einen vorbestimmten Fertigblasdruckwert erreicht hat, und
Ändern der zeitlichen Ansteuerung des Fertigblasventils (6) bei einem nachfolgenden Ansteuern, um die Zeitdauer zwischen dem Zeitpunkt des Ansteuerns des Fertigblasventils (6) und dem Zeitpunkt, zu dem der Fertigblasdruck einen vorbestimmten Fertigblasdruckwert erreicht hat, auf eine vorbestimmte Zeitdauer einzuregeln.

13. Verfahren nach einem der vorhergehenden Ansprüche, wobei der Schritt des Erzeugens des Külbels aus dem Glastropfen in der Vorform (2) die folgenden Verfahrensschritte umfasst:
Niederblasen des Glastropfens in der Vorform (2) mittels von oben in die Vorform (2) eingeblasener Druckluft und
Vorblasen des Glastropfens in der Vorform (2) zu einem Külbel mittels von unten in die Vorform (2) eingeblasener Druckluft, wobei
in dem Schritt des Niederblasens des Glastropfens in der Vorform (2) ein Ansteuern eines Niederblasventils (9) zum Erzeugen eines Niederblasdrucks in der Vorform (2) ab einem dritten Ansteuerzeitpunkt und ein gleichzeitiges Messen des Verlaufs des Niederblasdrucks erfolgt,
in dem Schritt des Vorblasens des Glastropfens in der Vorform (2) zu dem Külbel ein Ansteuern eines Vorblasventils (11) zum Erzeugen eines Vorblasdrucks in der Vorform (2) ab einem vierten Ansteuerzeitpunkt, der gegenüber dem dritten Ansteuerzeitpunkt um eine vorbestimmte Zeitdauer später ist, und ein gleichzeitiges Messen des Verlaufs des Vorblasdrucks erfolgt und
das Verfahren den folgenden zusätzlichen Verfahrensschritt aufweist, der ebenfalls jeweils für ein Paar einer Vorform (2) und einer Fertigform (3) durchgeführt wird:
Überprüfen, ob der Verlauf des gemessenen Niederblasdrucks und/oder der Verlauf des gemessenen Vorblasdrucks eine vorbestimmte Bedingung erfüllt haben.

## Claims

1. A method for operating an IS machine (1) for producing glass containers, wherein the IS machine (1) comprises a plurality of blank moulds (2) and a plurality of finished moulds (3) and in each case a blank mould (2) interacts with a finished mould (3), comprising the following method steps, which are carried out respectively for a pair consisting of a blank mould (2) and a finished mould (2):
introducing a glass gob into the blank mould (2),
producing a parison from the glass gob in the blank mould (2),
transferring the parison into the finished mould (3),
actuating a vacuum valve (4) for producing a vacuum in the finished mould (3) from a first actuating time point and simultaneously measuring the evolution of the vacuum pressure,
actuating a finish-blowing valve (6) for generating a finish-blowing pressure from a second actuating time point that is later than the first actuating time point by a predetermined duration, such that compressed air is blown into the finished mould from the top, and simultaneously measuring the evolution of the finish-blowing pressure and
checking whether the evolution of the measured vacuum pressure and the evolution of the measured finish-blowing pressure has fulfilled a predetermined condition,
wherein in the step of checking whether the evolution of the measured vacuum pressure and the evolution of the measured finish-blowing pressure have fulfilled a predetermined condition, a check is carried out as to whether the evolution of the measured vacuum pressure has a predetermined relationship to the evolution of the measured finish-blowing pressure.

2. The method according to claim 1, wherein in the step of checking whether the evolution of the measured vacuum pressure has a predetermined relationship to the evolution of the measured finish-blowing pressure, the duration between the time points is determined at which the evolution of the finish-blowing pressure and/or the evolution of the vacuum pressure is at a maximum.

3. The method according to claim 2, wherein in the event that the check indicates that the duration between the time points at which the evolution of the finish-blowing pressure and/or the evolution of the vacuum pressure is at a maximum, is not within a predetermined time interval, the time at which the vacuum valve (4) and/or the finish-blowing valve (6) is actuated is changed in a subsequent actuation, in order to adjust the duration between the time points at which the evolution of the finish-blowing pressure and/or the evolution of the vacuum pressure is at a maximum such that it is moved into the predetermined time interval.

4. The method according to claim 2 or 3, wherein in the event that the check indicates that the duration between the time points at which the evolution of the finish-blowing pressure and/or the evolution of the vacuum pressure is at a maximum is lower than a predetermined upper time duration limit, a warning message is output.

5. The method according to any one of claims 2 to 4, wherein in the event that the check indicates that the duration between the time points at which the evolution of the finish-blowing pressure and/or the evolution of the vacuum pressure is at a maximum is lower than a lower duration limit, the glass container for which duration fell below the lower duration limit during production is rejected.

6. The method according to claim 1, wherein in the step of checking whether the evolution of the measured vacuum pressure and the evolution of the measured finish-blowing pressure has fulfilled a predetermined condition, a check is carried out as to whether the evolution of the sum of the vacuum pressure and the finish-blowing pressure has not exceeded a predetermined maximum pressure.

7. The method according to claim 6, wherein in the event that the check indicates that the predetermined maximum pressure has been exceeded, the time at which the vacuum valve (4) and/or the finish-blowing valve (6) is actuated is changed in a subsequent actuation in order to adjust the evolution of the sum of the vacuum pressure and the finish-blowing pressure such that the predetermined maximum pressure is no longer exceeded.

8. The method according to claim 7, wherein the adjustment is set such that the ultimate pressure values of the vacuum pressure and the finish-blowing pressure are reached in the shortest possible time.

9. The method according to any one of claims 6 to 8, wherein in the event that the maximum pressure is only exceeded by a first predetermined pressure difference, a warning message is output.

10. The method according to any one of claim 6 to 9, wherein in the event that the maximum pressure is exceeded by a second predetermined pressure difference, which is greater than the first predetermined pressure difference, the glass container for which the second predetermined pressure difference was exceeded during production is rejected.

11. The method according to any one of the preceding claims comprising the additional method steps, which are carried respectively for a pair consisting of a blank mould (2) and a finished mould (3):
measuring the duration between the time point of actuating the vacuum valve (4) and the time point at which the vacuum pressure has reached a predetermined vacuum pressure value, and
changing the time at which the vacuum valve (4) is actuated in a subsequent actuation in order to adjust the duration between the time point of actuating the vacuum valve (4) and the time point at which the vacuum pressure has reached a predetermined vacuum pressure value to a predetermined duration.

12. The method according to any one of the preceding claims comprising the additional method steps which are carried respectively out for a pair consisting of a blank mould (2) and a finished mould (3):
measuring the duration between the time point of actuating the finish-blowing valve (6) and the time point at which the finish-blowing pressure has reached a predetermined finish-blowing pressure value, and
changing the time at which the finish-blowing valve (6) is actuated in a subsequent actuation in order to adjust the duration between the time point of actuating the finish-blowing valve (6) and the time point at which the finish-blowing pressure has reached a predetermined finish-blowing pressure value to a predetermined duration.

13. The method according to any one of the preceding claims, wherein the step of producing the parison from the glass gob in the blank mould (2) comprises the following method steps:
blowing down the glass gob in the blank mould (2) by means of compressed air blown into the blank mould (2) from the top and
pre-blowing the glass gob in the blank mould (2) to form a parison by means of compressed air blown into the blank mould (2) from the bottom, wherein
in the step of blowing down the glass gob in the blank mould (2), a blowing-down valve (9) is actuated to generate a blowing-down pressure in the blank mould (2) from a third actuating time point and the evolution of the blowing-down pressure is simultaneously measured,
in the step of pre-blowing the glass gob in the blank mould (2) to form the parison, a pre-blowing valve (11) is actuated to generate a pre-blowing pressure in the blank mould (2) from a fourth actuating time point that is later than the third actuating time point by a predetermined duration and the evolution of the pre-blowing pressure is simultaneously measured, and
the method comprises the following additional method step, which is also carried out respectively for a pair consisting of a blank mould (2) and a finished mould (3):
checking whether the evolution of the measured blowing-down pressure and/or the evolution of the measured pre-blowing pressure has fulfilled a predetermined condition.

## Revendications

1. Procédé d'utilisation d'une machine IS (1) pour la production de récipients de verre, dans lequel la machine IS (1) comprend une pluralité de moules ébaucheurs (2) et une pluralité de moules finisseurs (3) et dans chaque cas un moule ébaucheur (2) interagit avec un moule finisseur (3), comprenant les étapes de procédé suivantes, qui sont mises en oeuvre respectivement pour un couple constitué d'un moule ébaucheur (2) et d'un moule finisseur (2) :
introduction d'une goutte de verre dans le moule ébaucheur (2),
production d'une paraison à partir de la goutte de verre dans le moule ébaucheur (2),
transfert de la paraison dans le moule finisseur (3),
actionnement d'une soupape de vide (4) pour la production d'un vide dans le moule finisseur (3) à partir d'un premier point du temps d'actionnement et mesure simultanée de l'évolution de la pression de vide,
actionnement d'une soupape de soufflage de finition (6) pour la génération d'une pression de soufflage de finition à partir d'un deuxième point du temps d'actionnement qui est postérieur au premier point du temps d'actionnement par une durée prédéterminée, de telle sorte que de l'air comprimé est soufflé dans le moule finisseur depuis le sommet, et mesure simultanée de l'évolution de la pression de soufflage de finition et
contrôle si l'évolution de la pression de vide mesurée et l'évolution de la pression de soufflage de finition mesurée ont rempli une condition prédéterm i née,
dans lequel dans l'étape de contrôle si l'évolution de la pression de vide mesurée et l'évolution de la pression de soufflage de finition mesurée ont rempli une condition prédéterminée, un contrôle est mis en oeuvre pour savoir si l'évolution de la pression de vide mesurée a une relation prédéterminée avec l'évolution de la pression de soufflage de finition mesurée.

2. Procédé selon la revendication 1, dans lequel dans l'étape de contrôle si l'évolution de la pression de vide mesurée a une relation prédéterminée avec l'évolution de la pression de soufflage de finition mesurée, la durée entre les points du temps est déterminée de sorte que l'évolution de la pression de soufflage de finition et/ou l'évolution de la pression de vide est à un maximum.

3. Procédé selon la revendication 2, dans lequel dans le cas où le contrôle indique que la durée entre les points du temps auxquels l'évolution de la pression de soufflage de finition et/ou l'évolution de la pression de vide est à un maximum, n'est pas dans un intervalle de temps prédéterminé, le temps auquel la soupape de vide (4) et/ou la soupape de soufflage de finition (6) est actionnée est modifié dans un actionnement consécutif, afin d'ajuster la durée entre les points du temps auxquels l'évolution de la pression de soufflage de finition et/ou l'évolution de la pression de vide est à un maximum de telle sorte qu'elle est déplacée dans l'intervalle de temps prédéterminé.

4. Procédé selon la revendication 2 ou 3, dans lequel dans le cas où le contrôle indique que la durée entre les points du temps auxquels l'évolution de laf pression de soufflage de finition et/ou l'évolution de la pression de vide est à un maximum est inférieure à une limite supérieure de durée prédéterminée, un message d'avertissement est émis.

5. Procédé selon l'une quelconque des revendications 2 à 4, dans lequel dans le cas où le contrôle indique que la durée entre les points du temps auxquels l'évolution de la pression de soufflage de finition et/ou l'évolution de la pression de vide est à un maximum est inférieure à une limite inférieure de durée, le récipient de verre pour lequel la durée est passée sous la limite inférieure de durée pendant la production est rejeté.

6. Procédé selon la revendication 1, dans lequel dans l'étape de contrôle si l'évolution de la pression de vide mesurée et l'évolution de la pression de soufflage de finition mesurée ont rempli une condition prédéterminée, un contrôle est mis en oeuvre pour savoir si l'évolution de la somme de la pression de vide et de la pression de soufflage de finition n'a pas dépassé une pression maximale prédéterminée.

7. Procédé selon la revendication 6, dans lequel dans le cas où le contrôle indique que la pression maximale prédéterminée a été dépassée, le temps auquel la soupape de vide (4) et/ou la soupape de soufflage de finition (6) est actionnée est modifié dans un actionnement consécutif afin d'ajuster l'évolution de la somme de la pression de vide et de la pression de soufflage de finition de telle sorte que la pression maximale prédéterminée n'est plus dépassée.

8. Procédé selon la revendication 7, dans lequel l'ajustement est paramétré de telle sorte que les valeurs de pression ultimes de la pression de vide et de la pression de soufflage de finition sont atteintes dans le temps le plus court possible.

9. Procédé selon l'une quelconque des revendications 6 à 8, dans lequel dans le cas où la pression maximale est uniquement dépassée par une première différence de pression prédéterminée, un message d'avertissement est renvoyé.

10. Procédé selon l'une quelconque des revendications 6 à 9, dans lequel dans le cas où la pression maximale est dépassée d'une seconde différence de pression prédéterminée, qui est supérieure à la première différence de pression prédéterminée, le récipient de verre pour lequel la seconde différence de pression prédéterminée a été dépassée pendant la production est rejeté.

11. Procédé selon l'une quelconque des revendications précédentes comprenant les étapes de procédé supplémentaires, qui sont mises en oeuvre respectivement pour un couple constitué d'un moule ébaucheur (2) et d'un moule finisseur (3) :
mesure de la durée entre le point du temps d'actionnement de la soupape de vide (4) et le point du temps auquel la pression de vide a atteint une valeur de pression de vide prédéterminée, et
modification du temps auquel la soupape de vide (4) est actionnée dans un actionnement consécutif afin d'ajuster la durée entre le point du temps d'actionnement de la vanne de vide (4) et le point du temps auquel la pression de vide a atteint une valeur de pression de vide prédéterminée avec une durée prédéterminée.

12. Procédé selon l'une quelconque des revendications précédentes comprenant les étapes de procédé supplémentaires qui sont mises en oeuvre respectivement pour un couple constitué d'un moule ébaucheur (2) et d'un moule finisseur (3) :
mesure de la durée entre le point du temps d'actionnement de la soupape de soufflage de finition (6) et le point du temps auquel la pression de soufflage de finition a atteint une valeur de pression de soufflage de finition prédéterminée, et
modification du temps auquel la soupape de soufflage de finition (6) est actionnée dans un actionnement consécutif afin d'ajuster la durée entre le point du temps d'actionnement de la vanne de soufflage de finition (6) et le point du temps auquel la pression de soufflage de finition a atteint une valeur de pression de soufflage de finition prédéterminée avec une durée prédéterminée.

13. Procédé selon l'une quelconque des revendications précédentes, dans lequel l'étape de production de la paraison à partir de la goutte de verre dans le moule ébaucheur (2) comprend les étapes de procédé suivantes :
soufflage vers le bas de la goutte de verre dans le moule ébaucheur (2) au moyen d'air comprimé soufflé dans le moule ébaucheur (2) depuis le sommet et
pré-soufflage de la goutte de verre dans le moule ébaucheur (2) pour former une paraison au moyen d'air comprimé soufflé dans le moule ébaucheur (2) depuis le fond, dans lequel
dans l'étape de soufflage vers le bas de la goutte de verre dans le moule ébaucheur (2), une soupape de soufflage vers le bas (9) est actionnée pour générer une pression de soufflage vers le bas dans le moule ébaucheur (2) à partir d'un troisième point du temps d'actionnement et l'évolution de la pression de soufflage vers le bas est mesurée simultanément,
dans l'étape de pré-soufflage de la goutte de verre dans le moule ébaucheur (2) pour former la paraison, une soupape de pré-soufflage (11) est actionnée pour générer une pression de pré-soufflage dans le moule ébaucheur (2) à partir d'un quatrième point du temps d'actionnement postérieur au troisième point d'actionnement avec une durée prédéterminée et l'évolution de la pression de pré-soufflage est mesurée simultanément, et
le procédé comprend l'étape de procédé supplémentaire suivante, qui est également mise en oeuvre respectivement pour un couple constitué d'un moule ébaucheur (2) et d'un moule finisseur (3) :
contrôle si l'évolution de la pression de soufflage vers le bas mesurée et/ou l'évolution de la pression de pré-soufflage mesurée a rempli une condition prédéterminée.
